# EUROPEAN PATENT SPECIFICATION

(11) **EP 1 635 990 B1**
(45) Date of publication and mention of the grant of the patent: **13.12.2006**
(21) Application number: 03753914.5
(22) Date of filing: 18.07.2003
(51) Int. Cl.: B24B 9/16, B23K 26/00, B28D 5/00

(54) **LASER BRUTING MACHINE**
DIAMANTREIBEMASCHINE
MACHINE DE DEBRUTAGE AU LASER

(30) Priority: 30.05.2003 IN MU05502003
(43) Date of publication of application: 22.03.2006
(73) Proprietor: Patel, Arvindbhai Lavjibhai, 380 025 Ahmedabad (IN)
(72) Inventor: Patel, Arvindbhai Lavjibhai, 380 025 Ahmedabad (IN)
(74) Representative: Brants, Johan P.E.
(86) International application number: PCT/IN2003/000245
(87) International publication number: WO 2004/105999

(56) References cited:
- US-A- 5 190 024
- US-A- 5 932 119

## Description

### Technical Field

The present invention relates to A Novel Laser Bruting Machine.

The diamond has always exercised an irresistible seductive power and acquired an almost mythical fame because it is the most expensive of gems and the hardest of all minerals. Each diamond stone must therefore be studied in detail in order to determine the most advantageous manner to work it with the least loss of weight. In its unpolished form, a diamond is a rather vague crystal form, without any real luster. Only a succession of process such as marking, cleaving, sawing, girdling, etc. gives it its final facet form and brilliance. Girdling is the rounding of the base of sawn (or cleaved) piece so that it has more or less the form of a polished diamond. In conventional machine to achieve girdling of rough diamond stone, the sawn diamond is mounted on the chuck of a lathe and the desired rounded form is achieved by turning it against another diamond, as the cutting tool. The excess surface of the rough diamond cut with the conventional machine is imprecise. The conventional bruting machine works with lower speed and has the high weight loss. This is due to the cutting force spreads to other parts of the diamond. As each diamond is unique it has become imperative to develop new techniques in order to improve the productivity of the diamond industry.

The laser bruting machine according to the invention comprises the features of claim 1. By this machine the above limitations experienced by conventional bruting machine can be overcome. With the laser bruting machine according to the invention, bruting becomes a non-contact very fast process compared to conventional bruting machine. As laser bruting being a non-contact process gives more speed, reduces weight loss significantly and keeps the shape of diamond uniform. In novel laser bruting machine the computer becomes an important element in cutting of diamond. With the standard software computer suggest an optimal cut to have accurate rounded shape of the diamond taking dimensions & shape into account. Also the rough diamond stone to be centered and bruted is lit up by illuminating sources and these illuminating sources consist of plurality of LED's so the eye gets the impression that is always the same side of the stone that is lit and hence the illuminated rough diamond can be watched on CCTV through video system consist of CCD cameras. This is a useful technique, because novel bruting machine can check the process at all times without stopping the machine. Summing up all the advantages productivity increases considerably with a novel laser bruting machine.

### Disclosure of the Invention:

The present invention will be described with greater specific and clarity with reference to following drawings:

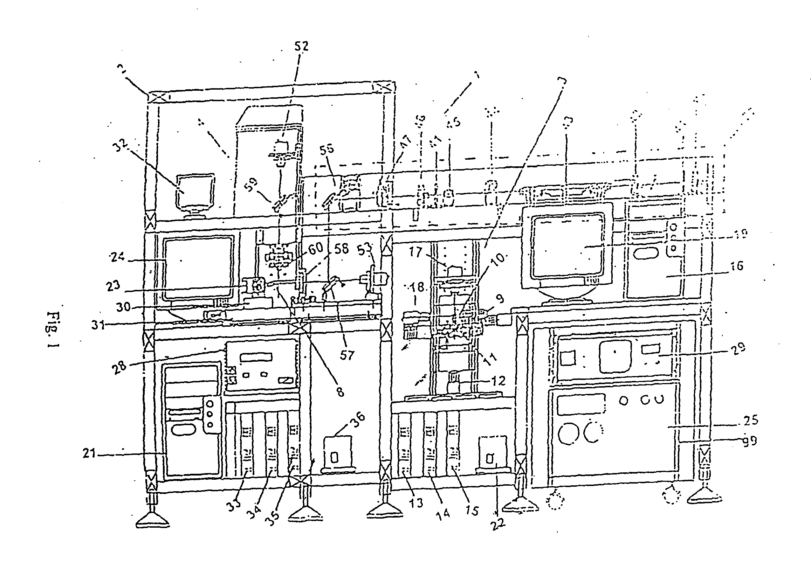

- **Fig. 1**: represents front view of bruting machine.

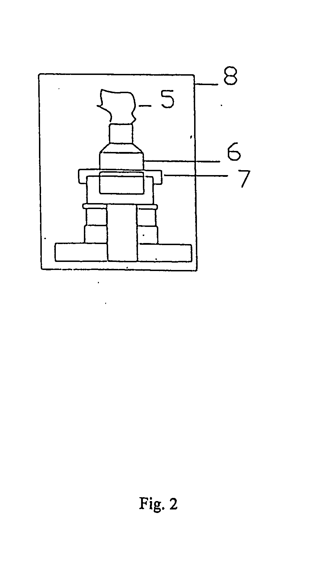

- **Fig. 2**: represents diamond holder.

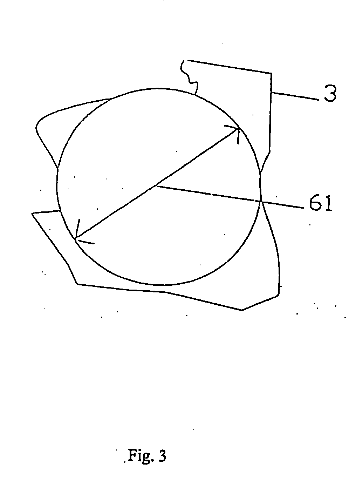

- **Fig. 3**: represents top view of rough diamond with possible maximum diameter

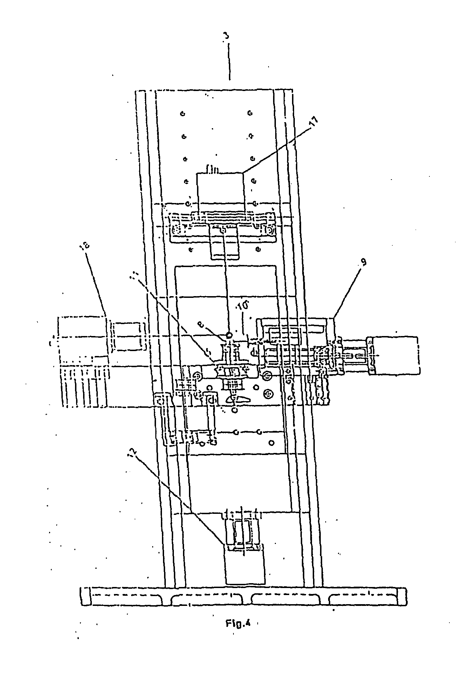

- **Fig. 4**: represents front view of setup device.

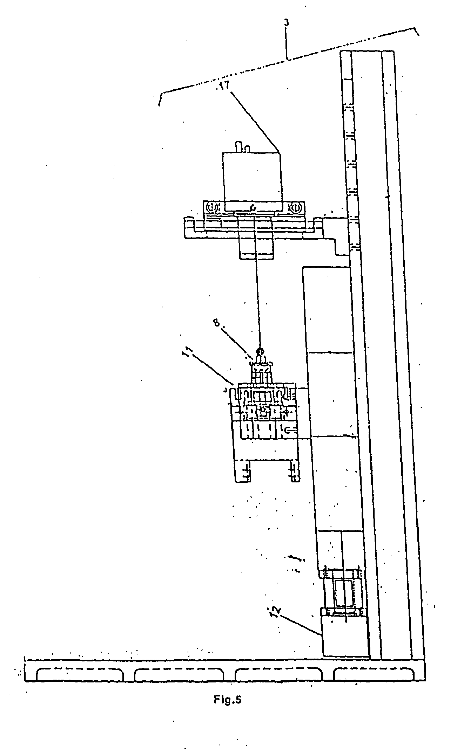

- **Fig. 5**: represents side view of setup device.

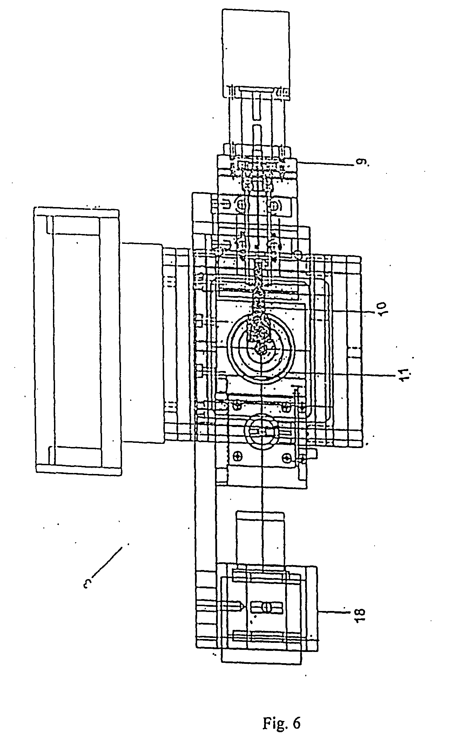

- **Fig. 6**: represents top view of setup device.

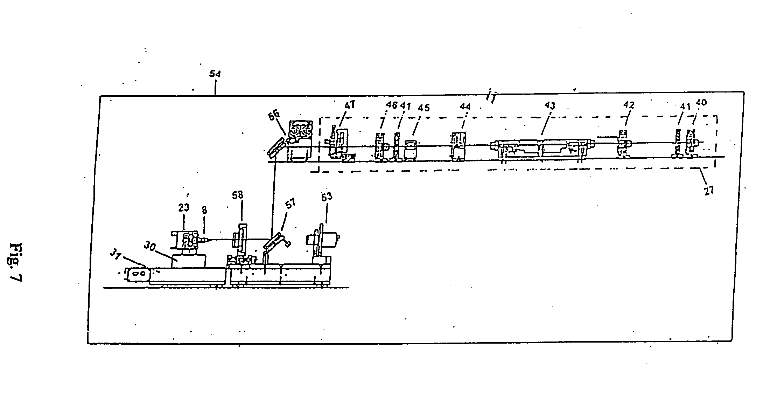

- **Fig. 7**: represents front view of bruting processing system.

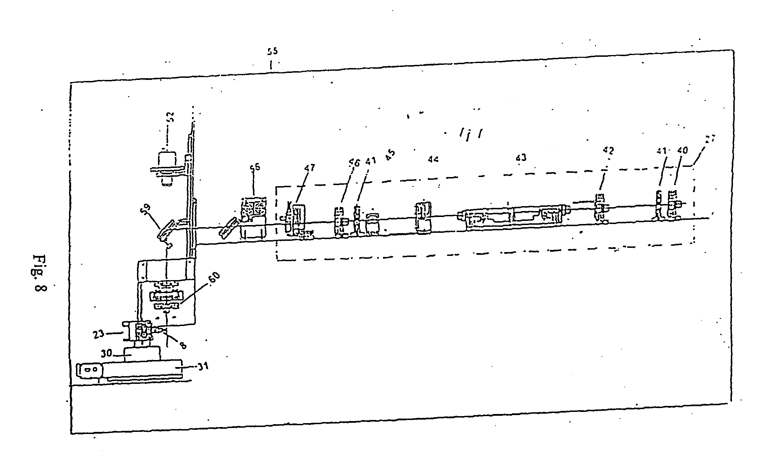

- **Fig. 8**: represents front view of girdle polishing system.

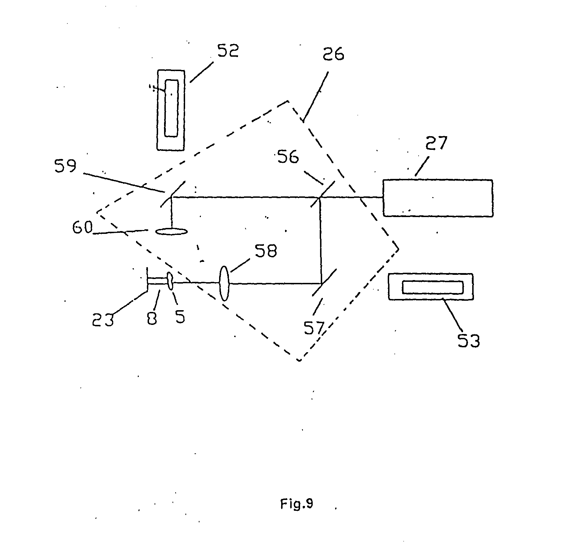

- **Fig. 9**: represents block diagram of Beam delivery mechanism.

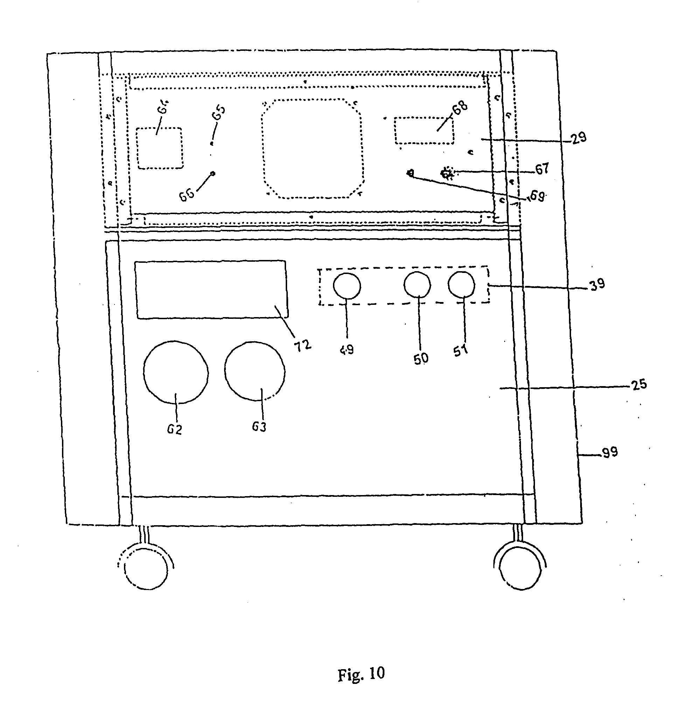

- **Fig. 10**: represents trolley containing power supply and heat exchanger.

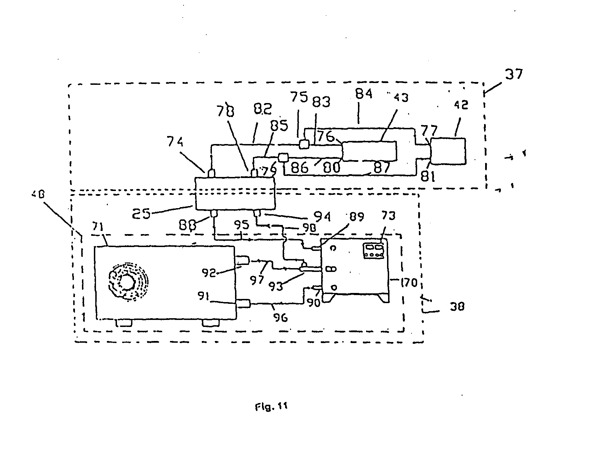

- **Fig. 11**: represents block diagram of cooling system & chilling system of heat exchanger.

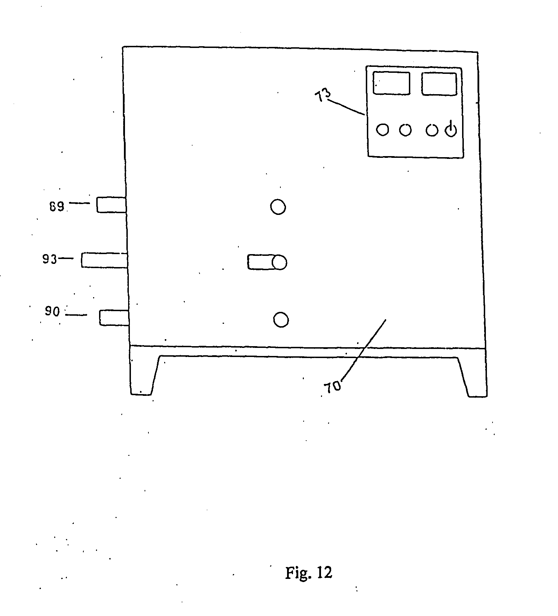

- **Fig. 12**: represents front view of chilling water tank.

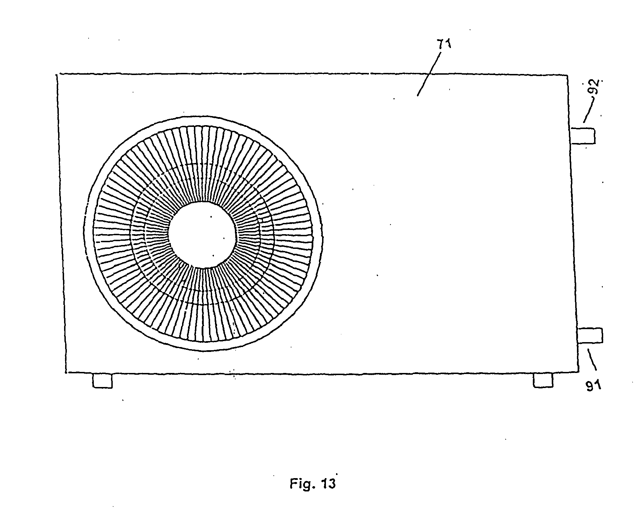

- **Fig. 13**: represents front view of split tank.

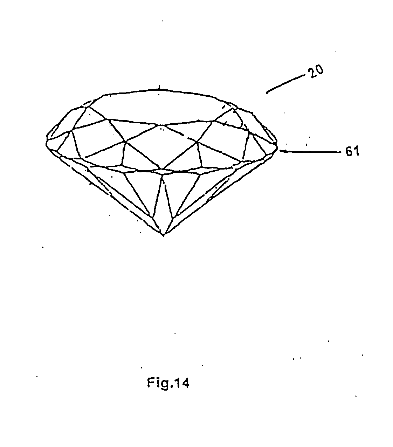

- **Fig. 14**: represents diamond

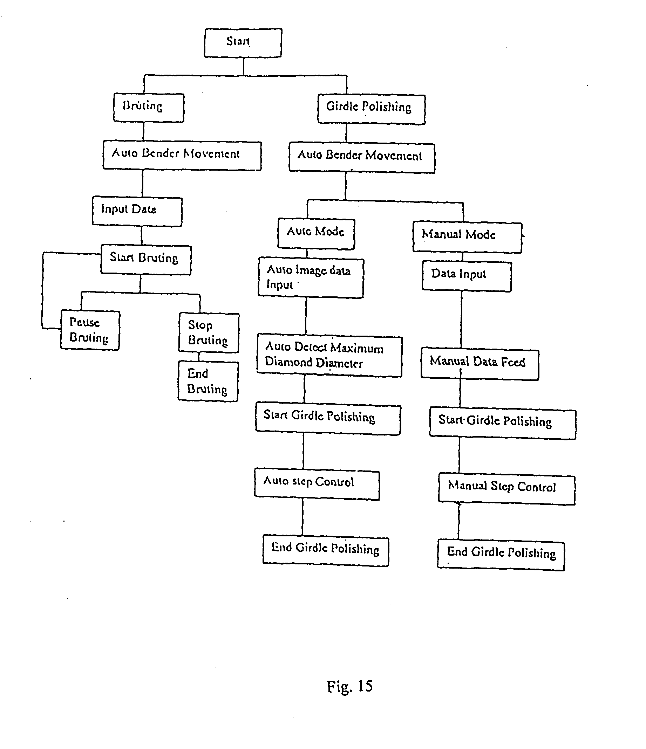

- **Fig.15**: represents flow chart.
- **Fig. 16 a**: represents random/initial position of rough diamond stone.

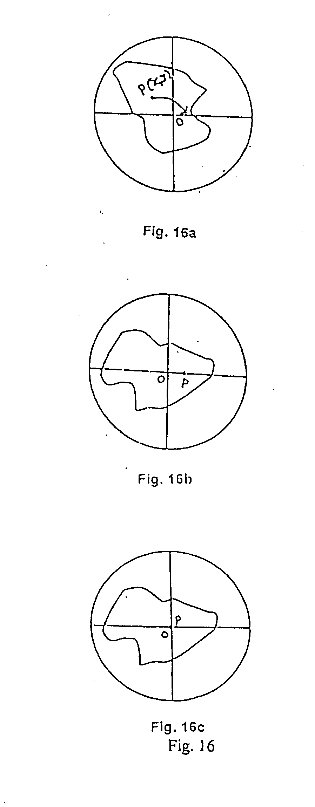

- **Fig. 16 b**: represents position of center of rough diamond stone on X-axis.
- **Fig. 16 c**: represents position of rough diamond stone when it is centered.

**A Novel Laser Bruting Machine** consist of (i) diamond holder **8** (ii) Setup device **3,** & (iii) processing device **4;** diamond holder **8** consist of stitching die **6,** magnetic die **7** and rough diamond **5**; setup device **3** consist of CNC interface, video system; Processing device **4** consists of CNC interface, heat exchanger **25**, video system, beam delivery mechanism **26**, laser source **27,** RF-Q Switch driver **28,** power supply **29** & stabilizer.

Bruting machine **1** which is accommodated on aluminum frame **2** consists of mainly three sections.
(1) Diamond Holder **8**
(2) Set up device **3**
(3) Processing device **4**

**(1) Diamond Holder 8:** A rough diamond **5** to be processed for Bruting or Girdle Polishing is stitched on top of the stitching die **6** by adhesive & heat. Due to magnetism of magnetic die **7,** stitching die **6** is fixed on top of magnetic die **7.** Combination of stitching die 6 and magnetic die **7** is referred to as Diamond holder **8.**

An automated gemstone/rough diamond stone **5** centering and data management system is provided to setup device **3.** The physical data of a rough diamond stone/gemstone **5** is determined relative to the measured spectral response of light energy incident to a gemstone **5.** Gemstone **5** is illuminated by a plurality of light sources such that the spectral response of the gemstone **5** is captured as a pixel data set, gauged, quantified and recorded for future reference via CCD cameras. A setup device **3** provides a imaging station for the automated centering and quantifying physical data of gemstone **5.** The video system/ imaging station is linked to computer/analysis station for communicating captured incident light data sets thereto. The analysis station/computer **16** employs a data processor and model database for assessing the physical data of the gemstone **5** by way of the communicated pixel data sets. The spectral response of a gemstone **5** to the incident light sources is quantified relative to model pixel data sets of the database and recorded for future reference therein. The operation of the setup device **3** is controlled by a control card and instruction set.

The data processor/control card of the analysis station/computer **16** provides an instruction set for facilitating communication with the setup device **3,** analyzing communicated pixel sets. The instruction set includes analytical and statistical image models, which extract pertinent physical data of gemstone from the pixel data sets. Additionally, the analysis station includes mass storage memory devices for storing the reference value database; analysis instruction set, and report information, which may include text as well as visual data. The physical data of gemstone **5** are communicated from the setup device **3** to the computer **21** of processing device **4** by means of LAN.

The control data processor/control card of the setup device **3** & processing device **4** provides an instruction set for automating the steps necessary to precisely position and operate the imaging hardware. The imaging system/video system of set up device **3** & processing device **4** extract consistently and accurately, size, shape, and proportion information from the images of a gemstone **5** using the data processing instruction set.

### (2) Setup device 3 consist of CNC Interface & Video System

**(I) CNC INTERFACE:** CNC Interface of setup device **3** ,comprising of Motorized X axis positioner **9,** Motorized rotatable platform **11,** Motorized up/down positioner **12,** Drive cards **13,14,15,** Control card, Computer **16** & Stepper Motors.
**(II) Video System** of setup device **3** consists of Upper CCD Camera **17** & Lower CCD camera **18.**

For accurate girdling/rounding or to remove surrounding excess surface of rough diamond **5** it is essential that rough diamond **5** should have rotating/circular motion around its center point for which it is required that rough diamond **5** along with stitching die **6** should be placed on center of top of the magnetic die **7** and it is done by CNC Interface, Computer **16** with standard software and Monitor **19.**

### Example:

Because of the Video system, rough diamond **5** appears on the monitor **19.** As upper CCD camera **17** & Lower CCD camera **18** are being used, one has option for watching rough diamond **5** either in elevation or plan view. Supposing surface of the rough diamond **5** is being selected by **3-**point method considering top view/plan view of rough diamond **5.** Then by mouse clicking three random end points of rough diamond **5** are selected and with standard software it gives physical data of rough diamond **5** and also puts stitching die **6** on center of top of the magnetic die **7** automatically using pusher rod **10** of motorized X axis positioner **9** & motorized rotatable platform **11.** The physical data of rough diamond **5** & predicted finished diamond **20** can be accessed in processing device **4** as computers **16** & **21** of setup device **3** and processing device **4** respectively are connected with LAN.

### Functioning of CNC Interface of setup device 3 :

### Example:

Referring to **figure 16a**, assume that center of rough diamond **5** is P(x,y) and thus it is offset from O(0,0). It represents initial position of rough diamond **5** placed on motorized rotatable platform **11** vertically.

Referring to **fig. 16b,** computerized vision system will measure the angle to rotate and by rotary motion, center P of rough diamond **5** is brought on X axis through motorized rotatable platform **11.** Stepper motor drives the motorized rotatable platform **11** and hence diamond holder **8** which is placed on motorized rotatable platform **11** also rotates and takes the position on X-axis.

Referring to **fig16c,** to match the center P with O, Pusher rod **10** which is fixed with Motorized X axis positioner **9** pushes P towards O and hence stitching die **6** is placed on center of top of magnetic die **7.** Motorized X axis positioner **9** is driven by stepper motor.

If elevation view or plan view of rough diamond **5** do not appear clearly on monitor **19** then Motorized up/down positioner **12** comes into action to give clear image of rough diamond **5** on monitor **19** by moving vertically. Motorized Up/down positioner **12** is driven by stepper motor.

Drive cards **13,14 & 15** are connected to motorized X- axis positioner **9,** motorized up/down positioner **12 &** motorized rotatable platform **11** respectively. Drive cards **13,14,15** are also connected with computer **16.** Drive cards **13,14,15** amplify the electronic signal coming from computer **16** and provides amplified electronic signal to Motorized X axis positioner **9,** Motorized up/down positioner **12,** & Motorized rotatable platform **11.** A contol card which is placed in the computer **16** controls the movement of motorized X axis positioner **9,** Motorized up/down positioner **12** & Motorized rotatable platform **11.** Also limit switches are provided to each end of motorized X axis positioner **9,** motorized rotatable platform **11** & motorized up/down positioner **12** to sense the home & end position. To switch on or off the drive cards **13,14,15,** drive card power supply **22** is connected to drive cards **13,14,15.**

### (3) Processing device 4:

Diamond holder **8** is carried to processing device **4** following the process of centering the stitching die **6** on magnetic die **7.** Diamond holder **8** is fixed horizontally on motorized rotatable platform **23.** As computer **16** of setup device **3** and computer **21** of processing device **4** are connected via LAN and hence physical data of rough diamond **5** taken from setup device **3** is accessed on monitor **24** through standard software installed in computer **21** of processing device **4.**

### Mechanism of processing device 4:

Processing device **4** consist of CNC Interface, Heat Exchanger **25,** Video system, Beam delivery mechanism **26,** Laser source **27,** RF-Q Switch driver **28** & Power supply **29.**
**(I) CNC Interface** of processing device **4** consist of Motorized Y-axis positioner **30** ,Motorized rotatable platform s, Motorized X axis positioner **31,** Computer **21,** Monitor **24,** CCTV **32,** Drive cards **33,34,35,** drive card power supply **36** & stepper motors to drive Motorized Y-axis positioner **30,** Motorized rotatable platform **23** & Motorized X axis positioner **31.**
**(II) Heat Exchanger 25** consist of Cooling system **37,** Chilling system **38** ,Interlock system **39.** Cooling system **37** associated with de-ionized water circulation from cooling system **37** to Laser head **43** & Q-switch **42** and vice versa. Chilling system **38** associated with water circulation from Heat exchanger **25** to chilling pump system **48** and vice versa. Chilling pump system **48** consist of chilling water tank **70** & split tank **71.** Heat exchanger **25** is connected to Power supply **29** via interlock cable. Interlock system **39** saves machine from getting damaged by switching off the power supply **29** automatically if (i) flow and/or (ii) level and/or (iii) temperature of de-ionized water unnecessarily decreases or increases. Interlock system **39** of heat exchanger **25** comprising of flow LED **49,** Level LED **50** & Temperature LED **51.**
**(III) Video system:** Video system of processing device **4** comprising of upper CCD Camera **52** and lower CCD camera **53.**
**(IV) Beam delivery mechanism 26** of processing device **4** consists of (i) Bruting process system **54** and (ii) Girdle polishing system **55.** Bruting process system **54** consists of (a) sliding beam bender **56** (b) lower beam bender **57** & (c) lower focusing device **58.** Girdle Polishing system **55** consist of (a) upper beam bender **59** (b) upper focusing device **60.** Sliding beam bender **56,** lower beam bender **57** and upper beam bender **59** are placed at 45° with respect to incoming laser beam.Lower focusing device **58** and upper focusing device **60** have illuminating source to illuminate rough diamond **5.** Each illuminating source has plurality of LED's.
**(V) Laser Source 27** consist of back mirror **40,** Apertures **41,41,** Q-switch **42,** Laser head **43,** shutter s, polariser **45,** front mirror **46** & beam expander **47.**
   Laser head **43** is the crucial part to generate the laser light. Front mirror **46** and back mirror **40** amplifies the laser light by providing feedback. Q-switch **42** is used to store the laser light energy to emit as a burst of high peak power. Safety shutter **44** blocks the laser beam in case of electrical failure. Safety shutter terminates laser by blocking the laser beam path and preventing emission of laser radiation out of the laser source. The safety shutter **44** is actuated by toggle switch. Apertures **41,41** restrict the light amplification along the off-axis of the resonator to provide sharp frequency band. Beam expander **47** expands the laser beam to minimize its divergence. To polarize laser beam polarizer **45** is used.
**(VI) RF-Q Switch driver 28**: To get the pulsed laser output with high peak power, the laser is operated in Q-Switch mode. The transducer in acoustic-optic Q-switch **42** requires RF power for operation of Q-switch **42** and such requirement is fulfilled by RF-Q Switch driver **28.** The RF source is pulsed at frequencies from 0.1 KHz to 50KHz corresponding to the desired pulse repetition rate of the laser. The quartz cell being switched with such a high frequency needs cooling. Therefore the Q-switch **42** also becomes cool. To operate Q-Switch **42** in pulsed mode, RF-Q Switch driver **28** is connected to Q-Switch **42** and computer **21.** Computer **21** sends the frequency data to RF-Q switch driver **28** and accordingly laser in laser source is operated in Q-switch mode. As Q-switch **42** is being switched with such a high frequency, it is cooled by circulation of de-ionized water for repetitive operations and therefore interlock system is provided.
**(VII) Power supply 29:** It ignites and controls the intensity of the laser light emitted by the laser lamp (Kr/Xe arc lamp). The intensity of light produced by the lamp is used for pumping the Nd atoms in Nd:YAG rod. Once the discharge in the lamp is produced, then by changing the current flowing through the lamp, the intensity of light emitted by the lamp can be controlled. In many applications laser is not used continuously and therefore the power supply **29** is provided with a special feature of standby mode which keep alive the discharge in the lamp by producing the optimum current required for the lamp to maintain the discharge in lamp. This particular arrangement is very useful in increasing the operational life of the lamp and also that of power supply. Because this will save the whole process of generating the trigger pulse for igniting the lamp.

### Functioning of Processing Device 4:

A diamond holder 8 which consist of stitching die **6** and magnetic die **7** is carried from setup device **3** and fixed horizontally to motorized rotatable platform **23.** In bruting process laser beam coming from laser source **27** falls on sliding beam bender **56** from which it falls on lower beam bender **57** and hence laser beam coming from lower beam bender **57** which is then focused by lower focusing device **58** and finally the focused laser beam falls on gemstone/rough diamond stone **5.** And therefore maximum diameter **61** of rough diamond stone/ gemstone **5** is achieved by removing excess surface from it by rotary motion and displacement on particular axis.

Also maximum diameter **61** of rough diamond **5** is achieved with the girdle polishing process. In girdle polishing process laser beam coming from laser source **27** falls on upper beam bender **59** bypassing sliding beam bender **56.** A laser beam coming from upper beam bender **59,** which is then focused by upper focusing device **60** and hence focused laser beam falls on rough diamond stone **5.**

Application of Bruting process **54** or Girdle polishing process **55** is to obtain maximum diameter **61** from rough diamond 5 by removing excess surrounding surface from rough diamond **5.** After Bruting process **54** or Girdle polishing process **55** the shape of rough diamond **5** is converted into cylindrical shape in general. To remove excess surrounding surface of rough diamond **5** laser beam from laser source **27** is used.

### Procedure for Switching on Heat exchanger 25 & Power supply 29:

Pump on/off knob **62** is accommodated in Heat exchanger **25,** which is kept "on" initially and Pump LED **63** is operated by Pump on/off knob **62.** Also digital temperature controlling unit **72** & Inter lock system **39** are provided to heat exchanger **25.** Then in Power supply **29,** T.P. **64** and Lamp **65** switches are switched "on" to trigger laser lamp of laser source **27.** Also as power supply **29** is connected with heat exchanger **25** via interlock cable and therefore interlock LED **66** is provided on power supply **29.** Push button switch "Push for control" **67** is pressed to start current setting unit **68.** The value displayed in current setting unit **68** can be varied by current variable knob **69.** Current setting unit **68** is provided to have desired watt for cutting the surrounding excess surfaces of rough diamond **5.** Heat exchanger **25** & Power supply **29** are accommodated in trolley **99.**

### Example:

The required heat in form of laser beam to cut the surrounding excess surface of the rough diamond **5** depends on the diamond quality. Supposing for a rough diamond **5** the required watt to cut the surrounding excess surface is **25** watt and to have such value current variable knob **69** of power supply **29** is allowed to move until **25** watt is achieved in watt meter.

### Application & functioning of Heat exchanger 25:

A large quantity of heat is generated inside the pumping cavity of laser source **27** when laser is produced. If the heat is not removed from the pumping cavity of laser source **27** then it will cause lamp and rod to get damaged and therefore a proper arrangement of heat distribution in terms of heat exchanger **25** is provided to processing device **4.** The heat from De-ionized water is subsequently removed by chilling system **38.** The temperature of De-ionized water is regulated by means of solenoid, which turns outside water flow from chilling system **38** on and off as required.

Heat exchanger **25** consist of (i) Cooling system **37** (ii) Chilling system **38** and (iii) Interlock system **39.** Cooling system **37** circulates de-ionized water from Heat exchanger **25** to Laser head **43** & Q-Switch **42** and vice versa. Also chilling system **38** circulates water from heat exchanger **25** to chilling pump system s and vice versa.

In heat exchanger **25** water circulation from chilling pump system **48** decreases the temperature of incoming de-ionized water at significant level and provides de-ionized water having less temperature to laser head **43** and Q-switch **42.** Flow of water from chilling system **38** used for decreasing temperature of incoming de-ionized water from cooling system **37** is getting heated and hence temperature of such water increases. The temperature of such water is required to decrease by means of chilling pump system **48.** Chilling pump system **48** consists of split tank **71** and chilling water tank **70.**

### Example:

Supposing display of digital temperature controlling unit **72** of Heat Exchanger **25** shows temperature of de-ionized water as 35°c. Now if it is required that temperature of de-ionized water should be 30°c then press SET switch of digital temperature controlling unit **72** for few seconds. When present temperature of de-ionized water (35°c) blinks then press up/down push button switches until required temperature 30°c displayed on the display of digital temperature controlling unit **72.** Press the SET push button switch of digital temperature controlling unit **72** when 30°c displayed on display of digital temperature controlling unit **72.** After few moments as temperature of de-ionized water is set at 30°c the chilling pump system **48** of Heat exchanger **25** which decreases the temperature of incoming de-ionized water stops working. Though functioning of chilling pump system **48** remains continue.

### Functioning of Chilling pump system 48 of heat exchanger 25:

Digital temperature control unit **73** is provided to chilling water tank **70.** When in display of digital temperature control unit **73** if value of present water temperature is significantly higher than the value of set water temperature then split tank **71** starts working and if value of present water temperature remains around the value of set water temperature then split tank **71** stops working. In this way the Chilling pump system **48** saves the power substantially.

Hence with the Heat exchanger **25,** temperature can be maintained and the same saves the machine from getting overheated.

IN port **74** of Heat exchanger **25** is connected to one end of Teflon connector **75** via hose pipe **82** while other two ends of Teflon connector **75** are connected to OUT port **76** of laser head **43** and OUT port **77** of Q-switch **42** via hose pipes **83,84** respectively. OUT port **78** of Heat exchanger **25** is connected to one end of Teflon connector **79** via hose pipe **85** while other two ends of Teflon connector **79** are connected to IN port **80** of laser head **43** and IN port **81** of Q-switch **42** via hose pipes **86,87** respectively. OUT port **78** of Heat exchanger **25** provides de-ionized water to Laser head **43** and Q-Switch **42** through IN port **80** and IN port **81** respectively while due to laser heat warm de-ionized water come out from OUT port **76** and OUT port **77** of Laser head **43** and Q-switch **42** respectively and enters into Heat exchanger **25** through IN Port **74.**

Chilling OUT port 88 of Heat exchanger **25** is connected to IN port **89** of chilling water tank **70** via hose pipe **95** and OUT port **90** of Chilling water tank **70** is connected to IN port **91** of Split tank **71** via hosepipe **96.** OUT port **92** of split tank **71** is connected to dual port **93** of chilling water tank **70** via hose pipe **97** and other end of dual port **93** of chilling water tank **70** is connected to Chilling IN port **94** of Heat exchanger **25** via hose pipe **98.**

Water used to decrease the temperature of de-ionized water becomes warm and comes out from chilling OUT port **88** of Heat exchanger **25** and travels towards IN port **89** of Chilling water tank **70.** Then this warm water travels into split tank **71** and split tank **71** decreases temperature of warm water and provides such water to chilling water tank **70** and from chilling water tank s water travels into Heat exchanger b through IN port **94.**

### Functioning of beam delivery mechanism 26 of Processing device 4:

If bruting process is selected on monitor **24** through software installed in computer **21** ,laser beam falls on sliding beam bender **56.** Then laser beam falls on lower beam bender **57** from which it travels towards lower focusing device 58 and hence focused laser beam falls on side of a rough stone 5 accommodated on diamond holder **8.**

If Girdle polishing process is selected on monitor **24** through software installed in computer **21** then laser beam falls on upper beam bender **59** bypassing sliding beam bender 56. Now laser beam passes through upper focusing device **60** and hence focused laser beam falls on rough stone **5** accommodated on diamond holder **8.**

Also upper focusing device **60** and lower focusing device **58** have illuminating component to illuminate rough diamond **5** by means of plurality of surrounding LED's for watching bruting process or girdle polishing process on CCTV **32.**

### Functioning of CNC interface of processing device 4:

### Motorized Rotatable Platform 23:

Surrounding excess surface of rough diamond **5** is removed by laser beam due to rotation of motorized rotatable Platform **23** on which diamond holder **8** is mounted horizontally. To drive the motorized rotatable platform **23,** stepper motor is used.

### Motorized Y-axis positioner 30 and Motorized X-axis positioner 31:

During Bruting process, laser beam dipping into rough diamond **5** gradually until the maximum diameter **61** or cylindrical shape of the diamond achieved for which displacement of rough diamond **5** through motorized rotatable platform **23** on Y- axis and/or X-axis is required which is accomplished by motorized Y-axis positioner **30** and/or motorized X-axis positioner **31.** Motorized Y-axis positioner **30** is mounted on Motorized X-axis positioner **31** in such a way that Motorized Y-axis positioner **30** can travel on Motorized X-axis positioner **31.** Displacement of motorized X-axis positioner **31** and/or motorized Y-axis positioner **30** is done automatically or by manual data feed through software installed in computer **21.**

Movement of Motorized Y-axis positioner **30,** Motorized X-axis positioner **31** and rotation of motorized rotatable platform **23** are controlled by control card installed in computer **21.**

As Y-drive card **33** is connected to computer **21** & motorized Y-axis positioner **30,** it amplifies the electronic signal coming from computer **21** and send amplified signal to motorized Y-axis positioner **30.** Similarly X-drive card **34** and R-drive card **35** send amplified electronic signals to Motorized X-axis positioner **31** and Motorized Rotatable platform **23** respectively. Y-drive card **33,** X-drive card **34** and R-drive card b can be switched on/off through drive card power supply **36** connected to them. Motorized Y- axis positioner **30** and Motorized X-axis positioner **31** are driven by stepper motors. Also limit switches are provided to each end of Motorized Y axis positioner **30 ,** Motorized X axis positioner **31** & motorized rotatable platform **23** to sense the home & end position.

A rough diamond **5** to be processed for bruting or girdle polishing can be watched on CCTV **32** through video system of processing device **4** consist of upper CCD camera **52** and lower CCD camera **53.**

As laser bruting being a non-contact process gives more speed, reduces weight loss significantly and keeps the shape of diamond uniform. In novel laser bruting machine the computer becomes an important element in cutting of diamond. With the standard software computer suggest an optimal cut to have accurate rounded shape of the diamond taking dimensions & shape into account. Also the rough diamond stone to be centered and bruted is lit up by illuminating sources and these illuminating sources consist of plurality of LED's so the eye gets the impression that is always the same side of the stone that is lit and hence the illuminated rough diamond can be watched on CCTV through video system consist of CCD cameras. This is a useful technique, because novel bruting machine can check the process at all times without stopping the machine and the same can be operated by a single person. Summing up all the advantages productivity increases significantly by using novel laser bruting machine.

## Claims

1. A Laser Bruiting Machine comprising a diamond holder (8) consisting of stitching die (6) with magnetic die (7) and rough diamond (5) adapted to be mounted on the said stitch die;
a Setup device (3) for setting up said diamond holder consisting of CNC interface of motorized X axis positioner 9, having a motorized rotatable platform 11 with motorized up/down positioner 12, provided with the drive cards 13,14,15 connected to the said motorized X-axis positioner and also a control card, connected to a computer 16 with monitor 19,driven by three stepper motors with power supply and provided with video system;
a processing device (4) for cutting and polishing of said diamond on the holder consists of CNC interface motorized Y-axis positioner 30 with motorized rotatable platform 23, motorized X axis positioner 31 connected to computer 21 with monitor 24, and provided with Y drive card 33, X drive card 34, R drive card 35, drive card power supply 36, and driven by three steeper motors, controlled by control card., a laser source (27) with beam delivery mechanism (26), controlled by RF-Q Switch driver (28); and
a CCTV connected to a CCD camera for observing the laser bruiting process.

2. A Laser Bruiting Machine as claimed in claim 1 wherein rough diamond 5 is stitched on the top of stitching die 6 by adhesive & heat; stitching die 6 along with rough diamond 5 is fixed on top of magnetic die 7 due to magnetism.

3. A Laser Bruiting Machine as claimed in claim 1 wherein motion of motorized X axis positioner 9, motorized rotatable platform 11, motorized up/down positioner 12 is controlled by drive card placed in computer 16; limit switches are provided to each end of motorized X axis positioner 9, motorized rotatable platform 11, motorized up/down positioner 12 to sense the home & end position.

4. A Laser Bruiting Machine as claimed in claim 1 wherein video system of setup device 3 is connected to computer 16 & it consists of Upper CCD camera 17 & Lower CCD Camera 18.

5. A Laser Bruiting Machine as claimed in claims 1 to 4 wherein one end of the said Y drive card 33, R drive card 35 & X drive card 34 are connected to motorized Y-axis positioner 30, motorized rotatable platform 23, & motorized X axis positioner 31 respectively and other end ofY drive card 33, R drive card 35, X drive card 34 are connected to control card of computer 21 through 37 pin, connector; Y -drive card 33, X drive card 34, R drive card 35 are connected to drive card power supply 36.

6. A Laser Bruiting Machine as claimed in claim 5 wherein motion of motorized Y-axis positioner 30, motorized rotatable platform 23, motorized X axis positioner 31 are controlled by control card of computer 21.

7. A Laser Bruiting Machine as claimed in claim 5 wherein displacement of rough diamond 5 of diamond holder 8 via motorized rotatable platform 23 on Y-axis and X-axis is accomplished by motorized Y-axis positioner 30 and motorized X-axis positioner 31 respectively; motorized Y-axis positioner 30 and motorized X-axis positioner 31 are mounted in such a way that motorized Y-axis positioner 30 travels on motorized X-axis posilioner 31.

8. A Laser Bruiting Machine as claimed in claim 3 wherein limit switches are provided to each end of Motorized Y axis positioner 30 , Motorized X axis positioner 31 & motorized rotatable platform 23 to sense the home & end position.

9. A Laser Bruiting machine as claimed in claim 1, wherein video system of processing device 4 is connected to computer 21 consist of upper CCD camera 52 and lower CCD camera 53.

10. A Laser Bruiting machine as claimed in claim 1 , wherein heat exchange 25 of processing device 4 is connected to power supply 29 and RF Q-switch driver 28 ; digital temperature controller 72 , LED,s 49, 50, 51 of interlock controller for flow , level & temperature indication of de-ionized water , pump on / off 62 , pump LED 63 are accommodated in heat exchange 25 .

11. A Laser Bruiting machine as claimed in claim 1 , wherein heat exchanger 25 consist of cooling system 37 , chilling system 38; cooling system 37 circulate de-ionized water while chilling system 38 circulate water.

12. A Laser Bruiting machine as claimed in claim 1, wherein Beam delivery mechanism 26 of processing device 4 consists of Bruiting process system 54, girdle polishing system 55.

13. A Laser Bruiting machine as claimed in claim 12, wherein Bruiting process system 54 consists of sliding beam bender 56 , lower beam bender 57 , lower focusing device 58.

14. A Laser Bruiting machine as claimed in claim 12 , wherein Girdle polishing system 55 consist of upper beam bender 59 , upper focusing device 60; sliding beam bender 56 , lower beam bender 57 and upper beam bender 59 are placed at 45Degree with respect to incoming laser beam; each of the beam bender 56,57,59, bends the laser beam at 90 degree ; lower focusing device 58 and upper focusing device60 focuses the incoming laser beam ; lower focusing device and upper focusing device 60 have illuminating source to illuminate rough diamond 5; each illuminating source of lower focusing device 58 & upper focusing device have plurality of LED, s .

15. A Laser Bruiting Machine as claimed in claim 1, wherein said source 27 consist of back mirror 40, apertures 41,41 , Q-switch 42 laser 43, shutter 44, polariser 45, from mirror 46 & beam expander 47.

## Patentansprüche

1. Laser-Bruting-Maschine, umfassend: einen Diamantenhalter (8), der aus einem Heftstempel (6) mit magnetischem Stempel (7) besteht, wobei ein Rohdiamant (5) auf dem Heftstempel zu montieren ist;
eine Einrichtvorrichtung (3) zum Einrichten des Diamanthalters, bestehend aus einer CNC-Schnittstelle eines motorisierten X-Achse-Positionierers (9), der eine motorisierte drehbare Plattform (11) mit motorisiertem Aufwärts/Abwärts-Positionierer (12) aufweist, versehen mit den Ansteuerkarten (13, 14, 15), die mit dem motorisierten X-Achse-Positionierer verbunden sind, und ferner einer Steuerkarte, die mit einem Computer (16) mit Monitor (19) verbunden ist, angetrieben durch drei Schrittmotoren mit Stromversorgung und versehen mit Videosystem;
eine Verarbeitungsvorrichtung (4) zum Schneiden und Polieren des Diamanten auf dem Halter, bestehend aus CNC-Schnittstelle und motorisiertem Y-Achse-Positionierer (30) mit motorisierter drehbarer Plattform (23), motorisiertem X-Achse-Positionierer (31), der mit einem Computer (21) mit Monitor (24) verbunden ist, und versehen mit einer Y-Ansteuerkarte (33), einer X-Ansteuerkarte (34), einer R-Ansteuerkarte (35), Ansteuerkartenstromversorgung (36), und angetrieben wird durch drei Schrittmotoren, gesteuert mittels Steuerkarte, einer Laserquelle (27) mit Strahlliefereinrichtung (26), gesteuert durch RF-Q-Schalteransteuervorrichtung (28); und
ein CCTV, das mit einer CCD-Kamera zum Beobachten des Laser-Bruting-Prozesses verbunden ist.

2. Laser-Bruting-Maschine nach Anspruch 1, bei der der Rohdiamant (5) auf die Oberseite des Heftstempels (6) mittels Klebstoff und Wärme geheftet wird; wobei der Heftstempel (6) zusammen mit dem Rohdiamanten (5) auf der Oberseite des magnetischen Stempels (7) mittels Magnetismus fixiert wird.

3. Laser-Bruting-Maschine nach Anspruch 1, bei der die Bewegung des motorisierten X-Achse-Positionierers (9), der motorisierten drehbaren Plattform (11) und des motorisierten Aufwärts/Abwärts-Positionierers (12) von der im Computer (16) platzierten Ansteuerkarte gesteuert wird; wobei Grenzschalter an jedem Ende des motorisierten X-Achse-Positionierers (9), der motorisierten drehbaren Plattform (11) und des motorisierten Aufwärts/Abwärts-Positionierers (12) vorgesehen sind, um die Anfangs- und Endpositionen zu erfassen.

4. Laser-Bruting-Maschine nach Anspruch 1, bei der ein Videosystem der Einrichtvorrichtung (3) mit dem Computer (16) verbunden ist und aus einer oberen CCD-Kamera (17) und einer unteren CCD-Kamera (18) besteht.

5. Laser-Bruting-Maschine nach einem der Ansprüche 1 bis 4, bei der jeweils ein Ende der Y-Ansteuerkarte (33), der R-Ansteuerkarte (35) und der X-Ansteuerkarte (34) mit dem motorisierten Y-Achse-Positionierer (30), der motorisierten drehbaren Plattform (23) bzw. dem motorisierten X-Achse-Positionierer (31) verbunden ist, und das andere Ende der Y-Ansteuerkarte (33), der R-Ansteuerkarte (35) und der X-Ansteuerkarte (34) mit der Steuerkarte des Computers (21) über einen 37-poligen Verbinder verbunden ist; die Y-Ansteuerkarte (33), die X-Ansteuerkarte (34) und die R-Ansteuerkarte (35) sind mit der Ansteuerkartenstromversorgung (36) verbunden.

6. Laser-Bruting-Maschine nach Anspruch 5, bei der die Bewegung des motorisierten Y-Achse-Positionierers (30), der motorisierten drehbaren Plattform (23) und des motorisierten X-Achse-Positionierers (31) jeweils durch die Steuerkarte des Computers (21) gesteuert wird.

7. Laser-Bruting-Maschine nach Anspruch 5, bei der eine Verschiebung des Rohdiamanten (5) des Diamantenhalters (8) über die motorisierte drehbare Plattform (23) auf der Y-Achse und der X-Achse mittels des motorisierten Y-Achse-Positionierers (30) bzw. des motorisierten X-Achse-Positionierers (31) bewerkstelligt wird; wobei der motorisierte Y-Achse-Positionierer (30) und der motorisierte X-Achse-Positionierer (31) derart montiert sind, dass der motorisierte Y-Achse-Positionierer (30) auf dem motorisierten X-Achse-Positionierer (31) läuft.

8. Laser-Bruting-Maschine nach Anspruch 3, bei der die Grenzschalter an jedem Ende des motorisierten Y-Achse-Positionierers (30), des motorisierten X-Achse-Positionierers (31) und der motorisierten drehbaren Plattform (23) vorgesehen sind, um die Anfangs- und Endpositionen zu erfassen.

9. Laser-Bruting-Maschine nach Anspruch 1, bei der das Videosystem der Verarbeitungsvorrichtung (4) mit dem Computer (21) verbunden ist und aus einer oberen CCD-Kamera (52) und einer unteren CCD-Kamera (53) besteht.

10. Laser-Bruting-Maschine nach Anspruch 1, bei der ein Wärmetauscher (25) der Verarbeitungsvorrichtung (4) mit der Stromversorgungsvorrichtung (29) und der RF-Q-Schalteransteuervorrichtung (28) verbunden ist; eine digitale Temperatur-Steuer/Regelvorrichtung (72), LEDs (49, 50, 51) einer Verriegelungssteuervorrichtung für die Strömung, eine Pegel- und Temperaturanzeige für deionisiertes Wasser, ein Pumpen-Ein/Aus-Schalter (62) und eine Pumpen-LED (63) sind im Wärmetauscher (25) aufgenommen.

11. Laser-Bruting-Maschine nach Anspruch 1, bei der der Wärmetauscher (25) aus einem Kühlsystem (37) und einem Abkühlungssystem (38) besteht; das Kühlsystem (37) wälzt das deionisierte Wasser um, während das Abkühlsystem (38) Wasser umwälzt.

12. Laser-Bruting-Maschine nach Anspruch 1, bei der die Strahiliefereinrichtung (26) der Verarbeitungsvorrichtung (4) aus einem Bruting-Prozesssystem (54) und einem Gürtelpoliersystem (55) besteht.

13. Laser-Bruting-Maschine nach Anspruch 12, bei der das Bruting-Prozesssystem (54) aus einem gleitenden Strahlablenker (56), einem unteren Strahlablenker (57) und einer unteren Fokussierungsvorrichtung (58) besteht.

14. Laser-Bruting-Maschine nach Anspruch 12, bei der das Gürtelpoliersystem (55) aus einem oberen Strahlablenker (59) und einer unteren Fokussierungsvorrichtung (60) besteht; der gleitende Strahlablenker (56), der untere Strahlablenker (57) und der obere Strahlablenker (59) sind mit 45° bezüglich des ankommenden Laserstrahls geneigt angeordnet; jeder der Strahlablenker (56, 57, 59) lenkt den Laserstrahl um 90° ab; die untere Fokussierungsvorrichtung (58) und die obere Fokussierungsvorrichtung (60) fokussieren den ankommenden Laserstrahl; die untere Fokussierungsvorrichtung und die obere Fokussierungsvorrichtung (60) weisen eine Beleuchtungsquelle auf, um den Rohdiamanten (5) zu beleuchten; jede Beleuchtungsquelle der unteren Fokussierungsvorrichtung (58) und der oberen Fokussierungsvorrichtung weist mehrere LEDs auf.

15. Laser-Bruting-Maschine nach Anspruch 1, bei der die Quelle (27) aus einem Rückspiegel (40), Öffnungen (41, 41), einem Q-Schalter (42), einem Laser (43), einem Verschluss (44), einem Polarisator (45), einem Frontspiegel (46) und einem Strahlaufweiter (47) besteht.

## Revendications

1. Machine de débrutage au laser comprenant un porte-diamant (8) constitué d'un moule de couture (6) avec un moule magnétique (7) et un diamant rugueux (5) adapté pour être monté sur ledit moule de couture ;
un dispositif de montage (3) pour monter ledit porte-diamant, constitué d'une interface CNC d'un positionneur (9) d'axe X motorisé, comportant une plateforme rotative motorisée (11) avec un positionneur haut/bas motorisé (12), équipé de cartes d'entraînement (13, 14, 15) reliées au dit positionneur d'axe X motorisé ainsi que d'une carte de commande, relié à un ordinateur (16) avec un moniteur (19), entraîné par trois moteurs pas à pas avec une alimentation électrique et équipé d'un système vidéo ;
un dispositif de traitement (4) destiné à couper et à polir ledit diamant sur le support qui est constitué d'une interface CNC d'un positionneur d'axe Y motorisé (30) avec une plateforme rotative motorisée (23), d'un positionneur d'axe X motorisé (31) relié à un ordinateur (21) avec un moniteur (24) et qui est équipé d'une carte d'entraînement Y (33), d'une carte d'entraînement X (34), d'une carte d'entraînement (35), d'une alimentation électrique de carte d'entraînement (36) et qui est entraîné par trois moteur pas à pas, commandés par une carte de commande, une source laser (27) avec un mécanisme de fourniture de faisceau (26), commandé par un dispositif d'entraînement à commutation RF-Q (28) ; et
une télévision à circuit fermé (CCTV) reliée à une caméra DTC pour observer le processus de débrutage au laser.

2. Machine de débrutage au laser selon la revendication 1, dans laquelle le diamant rugueux (5) est cousu au-dessus du moule de couture (6) par un adhésif et thermiquement ; le moule de couture (6) conjointement avec le diamant rugueux (5) étant fixé au-dessus du moule magnétique (7) par magnétisme.

3. Machine de débrutage au laser selon la revendication 1, dans laquelle le mouvement du positionneur d'axe X motorisé (9), de la plateforme rotative motorisée (11), du positionneur haut/bas (12) est commandé par une carte d'entraînement placée dans l'ordinateur (16); des interrupteurs de fin de course sont fournis au niveau de chaque extrémité du positionneur d'axe X motorisé (9), de la plateforme rotative motorisée (11), du positionneur haut/bas (12) pour détecter la position de début et fin.

4. Machine de débrutage au laser selon la revendication 1, dans laquelle le système vidéo du dispositif de montage (3) est relié à l'ordinateur (16) et est constitué d'une caméra DTC supérieure (17) et d'une caméra DTC inférieure (18).

5. Machine de débrutage au laser selon les revendications 1 à 4, dans laquelle une extrémité de ladite carte d'entraînement Y (33), de ladite carte d'entraînement R (35) et de ladite carte d'entraînement X (34) sont reliées au positionneur d'axe Y motorisé (30), à la plateforme rotative motorisée (23) et au positionneur d'axe X motorisé (31), respectivement et les autres extrémités de la carte d'entraînement Y (33), de la carte d'entraînement R (35) et de la carte d'entraînement X (34) sont reliées à la carte de commande de l'ordinateur (21) par l'intermédiaire d'un connecteur à broche (37 pin); la carte d'entraînement Y (33), la carte d'entraînement X (34) et la carte d'entraînement R (35) sont reliées à une alimentation électrique de carte d'entraînement (36).

6. Machine de débrutage au laser selon la revendication 5, dans laquelle le mouvement du positionneur d'axe Y motorisé (30), de la plateforme rotative motorisée (23), du positionneur d'axe X motorisé (31) est commandé par une carte de commande de l'ordinateur (21).

7. Machine de débrutage au laser selon la revendication 5, dans laquelle le déplacement du diamant rugueux (5) du porte-diamant (8) par l'intermédiaire de la plateforme rotative motorisée (23) sur l'axe Y et l'axe X est réalisé par le positionneur d'axe Y motorisé (30) et le positionneur d'axe X motorisé (31), respectivement; le positionneur d'axe Y motorisé (30) et le positionneur d'axe X motorisé (31) sont montés de sorte que le positionneur d'axe Y motorisé (30) se déplace sur le positionneur d'axe X motorisé (31).

8. Machine de débrutage au laser selon la revendication 3, dans laquelle des interrupteurs de fins de course sont fournis au niveau de chaque extrémité du positionneur d'axe Y motorisé (30), du positionneur d'axe X motorisé (31) et de la plateforme rotative motorisée (23) pour détecter la position de début et fin.

9. Machine de débrutage au laser selon la revendication 1, dans laquelle le système vidéo du dispositif de traitement (4) est relié à l'ordinateur (21) constitué d'une caméra DTC supérieure (52) et d'une caméra DTC inférieure (53).

10. Machine de débrutage au laser selon la revendication 1, dans laquelle l'échangeur thermique (25) du dispositif de traitement (4) est relié à une alimentation électrique (29) et à un dispositif d'entraînement à commutation RF-Q (28) ; un contrôleur de température numérique (72), des diodes électroluminescentes (LED) (49, 50, 51) d'un contrôleur d'interverrouillage pour une indication de température, de débit et de niveau d'eau déminéralisée, une pompe marche-arrêt (62), une LED de pompe (63) sont logés dans l'échangeur de chaleur (25).

11. Machine de débrutage au laser selon la revendication 1, dans laquelle l'échangeur de chaleur (25) est constitué d'un système de refroidissement (37), d'un système de réfrigération (38) ; le système de refroidissement (37) faisant circuler de l'eau déminéralisée alors que le système de réfrigération (38) fait circuler de l'eau.

12. Machine de débrutage au laser selon la revendication 1, dans laquelle le mécanisme de fourniture de faisceau (26) du dispositif de traitement (4) est constitué d'un système de traitement de débrutage (54) et d'un système de polissage de bords (55).

13. Machine de débrutage au laser selon la revendication 12, dans laquelle le système de traitement de débrutage (54) est constitué d'un déflecteur de faisceau coulissant (56), d'un déflecteur de faisceau inférieur (57), d'un dispositif de focalisation inférieur (58).

14. Machine de débrutage au laser selon la revendication 12, dans laquelle le système de polissage de bords (55) est constitué d'un déflecteur de faisceau supérieur (59), d'un dispositif de focalisation supérieur (60) ; le déflecteur de faisceau coulissant (56), le déflecteur de faisceau inférieur (57) et le déflecteur de faisceau supérieur (59) sont placés selon un angle de (45) degrés par rapport au faisceau laser entrant ; chacun des déflecteurs de faisceau (56, 57, 59) dévie le faisceau laser à 90 degrés ; le dispositif de focalisation inférieur (58) et le dispositif de focalisation supérieur (60) fixent le faisceau laser entrant ; le dispositif de focalisation inférieur et le dispositif de focalisation supérieur (60) ont une source de lumière pour éclairer le diamant rugueux (5) ; chaque source de lumière du dispositif de focalisation inférieur (58) et du dispositif de focalisation supérieur a une pluralité de LED.

15. Machine de débrutage au laser selon la revendication 1, dans laquelle ladite source (27) est constituée d'un miroir réfléchissant (40), d'ouvertures (41, 41), d'un interrupteur laser (42), d'un laser (43), d'un obturateur (44), d'un polarisateur (45), à partir du miroir (46) et d'un expanseur de faisceau (47).
